# EUROPEAN PATENT SPECIFICATION

(11) **EP 2 181 079 B1**
(45) Date of publication and mention of the grant of the patent: **13.11.2019**
(21) Application number: 08802998.8
(22) Date of filing: 12.08.2008
(51) Int. Cl.: C04B 40/00, C04B 24/26, C04B 28/14

(54) **A LIQUID ADMIXTURE COMPOSITION**
FLÜSSIGE BEIMISCHUNGSZUSAMMENSETZUNG
COMPOSITION DE MÉLANGE LIQUIDE

(30) Priority: 17.08.2007 US 894029
(43) Date of publication of application: 05.05.2010
(73) Proprietor: BASF Construction Solutions GmbH, 83308 Trostberg (DE)
(72) Inventor: HOMMER, Herbert, 84453 Mühldorf (DE); DIERSCHKE, Frank, 55276 Oppenheim (DE); TRIEFLINGER, Anja, 84508 Burgkirchen (DE); WUTZ, Konrad, 83308 Trostberg (DE); BICHLER, Manfred, 84549 Engelsberg (DE)
(74) Representative: BASF IP Association
(86) International application number: PCT/EP2008/060552
(87) International publication number: WO 2009/024499

(56) References cited:
- EP-A- 1 308 427
- EP-A- 1 669 332
- EP-A- 1 829 839
- WO-A-98/31643
- US-A1- 2002 107 310
- US-A1- 2002 111 399
- US-A1- 2003 106 464
- US-A1- 2006 281 885
- US-A1- 2006 281 886

## Description

### FIELD OF THE INVENTION

This invention relates to a liquid admixture composition for a calcium sulfate based binder system and a method for using such admixture.

### BACKGROUND OF THE INVENTION

Various types of organic compounds have been used to advantageously alter certain properties of wet hydraulic binder compositions. One class of components, which can collectively be called "superplasticizers", fluidify or plasticize wet cement composition to obtain a more fluid composition. A controlled fluidity is desired, such that the aggregate used in mortars and concretes does not segregate from the cement paste. Superplasticizers may also allow the cement composition to be prepared using a lower water to cement ratio in order to obtain a composition having a desired consistency which often leads to a hardened cement composition having a higher compressive strength development after setting.

A good superplasticizer should not only fluidify the wet hydraulic binder composition to which it is added, but also maintain the level of fluidity over a desired period of time. This time should be long enough to keep the wet composition fluid, e. g. in a ready-mix truck, while it is on its way to a job site. Another important aspect relates to the period for discharging the truck at the job site and the period needed for the cement composition for being worked in the desired final form. On the other hand, the cement mixture cannot remain fluid for a too long time period such that the set is greatly retarded, because this will slow down the work on the job and show negative influences on the characteristics of the final hardened products.

Conventional examples of superplasticizers are melamine sulfonate/formaldehyde condensation products, naphthalene sulfonate/formaldehyde condensation products and lignosulfonates, polysaccharides, hydroxycarboxylic acids and their salts and carbohydrates.

In most cases, superplasticizer are multi-component products with copolymers based on polyalkylene glycol monovinyl ethers and unsaturated dicarboxylic acid-derivatives as most important species. The European Patent EP 0 736 553 B1 discloses such copolymers comprising at least three sub-units and especially one unsaturated dicarboxylic acid derivative, polyalkylene glycol monovinyl ethers and additionally one hydrophobic structural unit, such as ester units. The third structural unit can also be represented by polypropylenoxid- and polypropylenoxid-polyethylenoxid-derivatives, respectively.

The German published application DE 195 43 304 A1 discloses an additive for water containing mixtures for the construction field comprising a) a water-soluble sulfonic acid-, carboxylic- or sulfate group containing cellulose derivative, b) a sulfonic acid- and/or carboxylic acid containing vinyl-(co)-polymer and/or a condensation product based on aminoplast-builders or acryl containing compounds and formaldehyde. This additive shall show sufficient water retention ability and rheology-modifying properties. Therefore, this additive shall be suitable for construction chemical compositions containing cement, plaster of paris, lime, anhydrite and other hydraulic binder components.

Copolymers based on unsaturated monocarboxylic or dicarboxylic acid derivatives, oxyalkylenglycolalkenylethers, vinylic polyalkylenglykol, polysiloxane or ester compounds used as additives for aqueous suspensions based on mineral or bituminous binders are described in US 6,777,517 B1. The use of such additives results in a decrease in the water/binder ratio and leads to highly fluid building materials without segregation of individual constituents from the building material mixture. The copolymers according to the U.S. '517 patent are useful as additives for aqueous suspensions of inorganic and organic solids and especially for suspensions that are based on mineral or bituminous binders such as cement, plaster of Paris, lime, anhydrite or other building materials based on calcium sulfate.

Also disclosed are copolymers of unsaturated ethers that can be used as plasticizers for cement containing mixtures, such as described in EP 0 537 870 A1. These copolymers contain an ether co-monomer and as additional co-monomer an olefinic unsaturated mono-carboxylic acid or an ester or a salt thereof, or alternatively an olefinic unsaturated sulfonic acid. These copolymers have a very short ether side chain of from 1 to 50 units. The short side chain causes a sufficient plasticizing effect of the copolymers in cement containing masses with a reduced slump loss of the construction chemicals mass itself.

US 6,139,623 discloses an emulsion admixture for use in hydraulic cement compositions formed by emulsifying an antifoaming agent, a surfactant and a copolymer having a carbon-containing backbone to which are attached groups that function as cement-anchoring members by forming ionic bonds and oxyalkylene groups. This admixture comprising an ethylene oxide/propylene oxide (EO/PO) type comb polymer and an antifoaming agent allows a predictable air control in hydraulic cement compositions such as concrete. The term "cement composition" refers to pastes, mortars, grouts such as oil well cementing grouts, and concrete compositions comprising a hydraulic cement binder. Typical antifoaming agents are phosphate ester, borate ester and polyoxyalkylene copolymers with defoaming properties. The surface active component (surfactant) is said to stabilize the emulsion mixture and is chosen from the group consisting of an esterified fatty acid ester of a carbohydrate, a C₂ to C₂₀ alcohol having polyoxyalkylene groups or a mixture thereof.

An admixture composition for cementitious compositions is published in US 2005/0257720 A1. This admixture comprises a water insoluble defoamer, an amine salt solubilizing agent capable of solubilizing the water insoluble defoamer in an acidic medium, and optionally a dispersant for cementitious compositions. This combination of an amine salt solubilizing agent, a water insoluble defoamer and a dispersant provides a stable admixture for cementitious compositions by showing a long-term storage stability. Polycarboxylates are typical dispersant components. Mineral oils, vegetable oils, fatty acid ester, ether compounds, hydroxyl functional compounds, an alcohol, a phosphoric ester, a silicon, a polyoxyalkylene, a hydrocarbon, an acetylenic compound and a polymer comprising at least one of propylene oxide or ethylene oxide moieties are typical water insoluble defoamer. Hydraulic cements are portland cement, masonry cement, alumina cement, refractory cement, magnesia cement, calciumsulfoaluminate cement and oil well cements.

WO 2006/021792 A2 discloses a method of cementing in a subterranean formation whereby a cement composition is provided that comprises water, hydraulic cement and a defoamer. Components of the defoamer include at least one compound selected from the group of a defoaming hydrocarbon base fluid, a surfactant, a hydrophobic particle or a mixture therefore. The hydraulic cement can be a gypsum cement and the cement composition can further contain a dispersant.

As indicated above this application is based on the prior patent published as US 2006/0281886, which discloses a co-polymer comprising two monomer components with a component a) being an olefinic unsaturated monocarboxylic acid co-monomer or an ester or a salt thereof or an olefinic unsaturated sulfuric acid co-monomer or a salt thereof, and with component b) preferably represented by an ether compound. This two monomeric co-polymer can be preferably used as a superplasticizer in a hydraulic binder containing composition. There it is alternatively disclosed that the co-polymer can be used in combination with a defoaming component that is also an additional structural unit of the co-polymer. Consequently, the defoaming component can be chemically attached to the co-polymer or being present in free form in a blend. Under general aspects the prior art teaches the use of dispersing agents (plasticizers) such as polycarboxylate ethers (PCE) as typical additive for calcium sulfate containing binder systems. This results in a water reduction as well as in an enhancement of physical properties such as compressive strength due to an increase in gypsum cast density. Additionally, the workability and preferably the rheological behavior of the construction chemicals composition are improved. On the other hand the addition of PCE based dispersants causes a distinct air entrainment to the binder component that worsens the physical properties of the composition. For overcoming these drawbacks defoamer components are used as additional additive to the dispersing agent. However, defoamers show a low solubility in aqueous formulations and cause an insufficient stability. Moreover, the defoaming properties of the formulation decrease over time due to the resulting phase separation of the defoamer and the dispersant.

According to US 2002/107310 solubilizing agents are mixed with water insoluble defoamers and a dispersant for cementitious compositions to provide an admixture for cementitious compositions that is stable over time. Suitable solubilizing agents include alkoxylated moieties or particles. A cementitious composition is provided that includes cement, water, a water insoluble defoamer, a dispersant for cementitious compositions, and a solubilizing agent that solubilizes the water insoluble defoamer. A method is provided for making a cementitious composition that includes mixing cement, water, a water insoluble defoamer, a dispersant for cementitious compositions, and a solubilizing agent that solubilizes the water insoluble defoamer.

Water soluble air controlling agents according to US 2002/111399 can be admixed with dispersant for cementitious compositions to provide an admixture for cementitious compositions that is stable over time. The water soluble air controlling agents are compatible with water based polycarboxylate polymer dispersants. Suitable water soluble air controlling agents include alkoxylated polymers. A cementitious composition is provided that includes cement, water, a dispersant for cementitious compositions, and a water soluble air controlling agent. A method is provided for making a cementitious composition that includes mixing cement, water, a dispersant for cementitious compositions, and a water soluble air controlling agent.

The objective of EP-A- 1 308 427 is to provide a cement additive which causes no increase in the amount of air and can thus stably-maintain the amount of air entrained even when the time of kneading is prolonged in the production of cement compositions. A further object is to provide a cement admixture having such air entraining properties and having a high level of water-reducing capacity as well as a cement composition.

It is an object of US 2003/106464 to provide a cement admixture which can show not only a high dispersing ability and a slump loss preventing effect but also a viscosity reducing effect and can show these characteristics even in the high water reduction ratio range, and a cement composition in which this admixture is used: A cement admixture comprising, as three essential constituents, a copolymer (A), an unsaturated (poly)alkylene glycol ether monomer (a) and an unpolymerizable (poly)alkylene glycol (B) not containing an alkenyl group, wherein the content of the unsaturated (poly)alkylene glycol ether monomer (a) is 1 to 100% by mass relative to the copolymer (A) and the content of the unpolymerizable (poly)alkylene glycol (B) not containing an alkenyl group is 1 to 50% by mass relative to the copolymer (A), the copolymer (A) comprising, as essential constituent units, a constituent unit (I) derived from the unsaturated (poly)alkylene glycol ether monomer (a) and a constituent unit (II) derived from an unsaturated carboxylic acid monomer (b), with the constituent unit (I) and constituent unit (II) each accounting for not less than 1% by mass based on all the constituent units and the unsaturated carboxylic acid monomer (b) being an unsaturated monocarboxylic acid monomer.

WO98/31643A is directed to a exemplary emulsion admixture for use in hydraulic cement compositions formed by emulsifying an antifoaming agent, surfactant, and a comb polymer having a carbon-containing backbone to which are attached cement-anchoring members and oxyalkylene groups. A method of making a stable emulsion admixture comprising the comb polymer, as well as a hydraulic cement composition comprising the admixture, are also described.

The problem according to EP-A-1 669 332 is to provide a superior cement dispersant and a concrete composition containing the cement dispersant, the cement dispersant being a water-soluble amphoteric copolymer which contains an alkylene oxide adduct of a polyamide polyamine having an unsaturated group and at least two types of polyalkylene glycol ester. When the cement dispersant is compounded with a concrete composition, the dispersion performance thereof increases with time, and the concrete viscosity is effectively decreased. The cement dispersant composition contains a water-soluble amphoteric copolymer or the neutralized salt thereof as an essential component, which is obtained by copolymerizing (A) an alkylene oxide adduct of a polyamide polyamine having an unsaturated group, (B) (meta)acrylic acid or an alkali metal, ammonium, or alkanolamine salt thereof, (C) an ester of an alkylene glycol and methacrylic acid, and (C) an ester of an alkylene glycol and acrylic acid. In addition, the concrete composition containing the above cement dispersant is also disclosed.

Based on the different characteristics and the availability of the superplasticizers mentioned above, it has been further desired to come up with new admixtures which are an improvement over the current state of the art. It is thus an object of this invention to provide new additives for calcium sulfate binder containing compositions which impart to wet binder compositions excellent fluidizing and water reduction properties. An additional aspect is an aqueous and calcium sulfate based suspension with sufficient workability.

### DETAILED DESCRIPTION OF THE INVENTION

The present invention relates to a liquid admixture composition for a calcium sulfate binder system containing composition comprising an aqueous composition comprising a) a copolymeric dispersing component, having a₁) a carbon-containing backbone to which are attached groups that function as calcium-sulfate compound-anchoring members by forming ionic bonds with calcium ions of the calcium sulfate compound, and a₂) oxyalkylene groups, b) an antifoaming agent component, comprising tri-alkylphosphate c) an surfactant component, selected from the group consisting of a styrene/maleic acid copolymer, or an alcohol ethoxylate R₁₀-(EO)-H wherein R₁₀ is an aliphatic hydrocarbon group having from 1 to 25 carbon atoms, and d) water.

The term "calcium sulfate compound" according to this invention means calcium sulfate in its anhydrous and hydrate forms, such as gypsum, anhydrite, calcium sulfate dihydrate and calcium sulfate hemi-hydrate.

The term "gypsum" according to this invention is also known as calcium sulfate, whereby calcium sulfate can be used in its various anhydrous and hydrate forms with or without crystal water. Natural gypsum is represented by calcium sulfate dihydrate and the natural crystal water free form of calcium sulfate is represented by the term "anhydrite". Besides the natural forms, calcium sulfate is a typical by-product of technical processes characterized by the term "synthetic gypsum". One example of such technical processes is the flue gas desulphurization. Synthetic gypsum may also be a by-product of phosphorous acid and hydrogen fluoride production methods for gaining hemi-hydrate forms (CaSO₄ · ½H₂O). Calcium sulfate dihydrate (CaSO₄ · 2H₂O) may be calcined by driving off the water of hydration. Products of the various calcined procedures are alpha or beta hemi-hydrate. Beta calcium sulfate hemi-hydrate particles show a highly porous structure formed by the rapid release of water during the heating in open units. Alpha hemi-hydrate is produced by a de-watering of gypsum in closed autoclaves. In this case the crystal form of alpha hemi-hydrate has lower surface area and is denser, and therefore lower water demand than beta hemi-hydrate.

On the other hand, gypsum hemi-hydrate re-hydrates with water to calcium dihydrate crystals. Usually, the hydration of calcium sulfate hemi-hydrate is completed in a period of minutes to hours indicating a clearly shortened workability period in contrast to cements that hydrate in periods over hours or days. These characteristics make gypsum an attractive alternative to cement as hydraulic binder in various fields of application, because hardened final gypsum products show a characteristic hardness and compressive strength.

Calcium sulfate hemi-hydrate can produce at least two crystal forms, whereby α-calcined gypsum is usually de-watered (de-hydrated) in closed autoclaves. For various fields of application, β-calcined gypsum may be selected due to its availability under economical aspects. However, these advantages may be reversed because β-calcined gypsum needs higher water amounts for workability and for making slurries of a given fluidity. Hardened or dried gypsum made from calcium sulfate hemihydrate mixed at higher water-stucco-ratio tends to be less dense. Therefore, products thereof show less strength than gypsum products that have been made with smaller amounts of water.

In general, the workability of gypsum, but also of other hydraulic binders, can be improved under hydraulic aspects by adding dispersants. In this connection, the admixture composition according to this invention represents a suitable dispersant because of the dispersing properties of its aqueous composition component.

In a specific alternative the claimed admixture contains component a) in an amount of 10 to 60.0 % by weight, the antifoaming agent b) 0.01 to 10.0 % by weight, the surfactant component c) 0.01 to 10.0 % by weight, and the rest is d) water. The given amounts are based on the total aqueous composition. In a more preferred admixture the component a) is in an amount of 20.0 to 50.0 % by weight, the antifoaming agent b) 0.01 to 5.0 % by weight, the surfactant component c) 0.01 to 5.0 % by weight, and the rest as d) water.

Based on the main aspect of the invention, the aqueous composition comprising the components a), b), c) and d) is an essential component of the liquid admixture composition for a calcium sulphate based binder system. An important aspect is the amounts of the single components a) to d) and therefore one preferred aspect of the invention is an admixture wherein the amounts of the antifoaming agent b) and the surfactant component c) are independently from 0.05 to 10.0 % by weight, related to the dispersing component a).

The component a) is a copolymer having a₁) a carbon containing backbone to which are attached groups that function as calcium sulfate compound-anchoring members by forming ionic bonds with calcium ions of the calcium sulfate compound, and a₂) oxyalkylene groups.

Preferably the copolymer of component a) includes two monomer components wherein component a₁) is:
an olefinic unsaturated mono-carboxylic acid co-monomer or/and an ester or/and salt thereof, or/and an olefinic unsaturated sulfonic acid compound as further co-monomer or/and a salt thereof,
and component a₂) is:
a co-monomer according to the general formula (I) 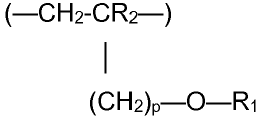 wherein R₁ is 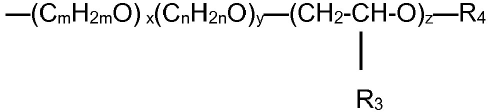 and whereby R₂ = H or an aliphatic hydrocarbon group having from 1 to 5 carbon atoms, R₃ is a non-substituted or substituted aryl group and preferably phenyl, and R₄ = H or an aliphatic hydrocarbon group having from 1 to 20 carbon atoms, a cycloaliphatic hydrocarbon group having from 5 to 8 carbon atoms, a substituted aryl group having from 6 to 14 carbon atoms or a compound selected from the group 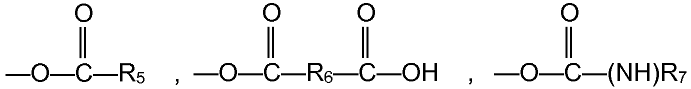 wherein R₅ and R₇ may each be an alkyl, aryl, aralkyl or alkaryl group and R₆ may be an alkyliden, aryliden, aralkyliden or alkaryliden group and p = 0, 1, 2 or 3, m and n = independently 2, 3, 4 or 5, x and y are independently and integer from 1 to 350, and z = 0 to 200, with I) the copolymer being a polymer with the co-monomer units representing the components a₁) and a₂) each showing no intra-molecular differences, or/and with the copolymer being a polymeric mixture of the components a₁) and a₂) with the co-monomer units representing the components a₁) or/and a₂) showing intra-molecular differences regarding R₁ or/and R₂ or/and R₃ or/and R₄ or/and R₅ or/and R₆ or/and R₇ or/and m or/and n or/and x or/and y or/and z. This means that the copolymer is made of a polymerized series of the components a₁) and a₂) with I) each of the components a₁) and a₂) showing no intra-molecular differences (only two different co-monomer units representing the components a₁) and a₂)), II) each of the components a₁) and a₂) showing intra-molecular differences according to the various claimed representatives R₁ to R₇, m, n, x, y, z, or III) a mixture of the alternatives I) and II), whereas either the co-monomer units representing component a₁) are identical and the co-monomer units representing component a₂) show intra-molecular differences or the co-monomer units representing component a₁) show intra-molecular differences and the co-monomer units representing component a₂) are identical. All of the discussed molecular differences are mainly focused on the side chains of the polymers and particularly on mixed side chains of component a₂) and incorporated herein as part of the present invention.

In general, these polymers according to the invention and based on their dispersing properties show excellent plasticizing effects over time and additionally can be prepared by using usual preparation methods. Therefore, under economic aspects, these co-polymers as a component of liquid admixture compositions and together with other functional components such as the co-claimed antifoaming agent and the surfactant show significant improvements over the prior art. Another aspect is that the aqueous composition as a component of the admixture exhibits its plasticizing effect mainly in the field of gypsum as defined herein. Additionally, the improved effect of the copolymer together with the antifoaming agent and the surfactant can be selectively chosen based on the broad variety of the ether co-monomer and especially based on the broad scope of the side chain length.

The copolymer according to the invention as component a) exhibits especially more advantageous properties when it includes the co-monomer component a₁) in amounts of from 30 to 99 mol-% and the ether component a₂) from 70 to 1 mol-%.

As used herein, the mentioned co-monomers a₁) and a₂), respectively, are to be interpreted as structural units of the claimed copolymer after its polymerization.

In a preferred embodiment the mol-% of the co-monomer component a₁) and the co-monomer a₂) is from 40 to 95 and from 60 to 5, respectively, and the ether component a₂) with p = 0 or 1 is represented by a vinyl or an allyl group and additionally contains a polyether as R₁; additionally, the co-monomer component a₁) is in this alternative an acrylic acid or a salt thereof.

In general, according to the present invention, the co-monomer component a₁) is selected from the group consisting of acrylic acid, methacrylic acid, crotonic acid, isocrotonic acid, maleic acid, fumaric acid, citraconic acid, itaconic acid, (meth)allyl sulfonic acid, vinyl sulfonic acid, and their suitable salts or their alkyl or hydroxyalkyl esters, or mixtures thereof.

Alternatively, other co-monomers, such as styrene or acrylamides may be additionally be co-polymerized with the ether component a₂) and co-monomer component a₁). Alternatively, components with hydrophobic properties may be used. Compounds with ester structural units, polypropylene oxide or polypropylene oxide-polyethylene oxide (PO/PE) or polybutylene oxide-polyoxyethylene (PB/PE) or polystyrene oxide-polyethylene oxide (PS/PE)-units are preferred. These additional structural units should be represented in the copolymer in amounts up to 5 mol-%; amounts from 0.05 to 3 mol-% and 0.1 to 1.0 mol-% are preferred.

An additional preferred alternative of the copolymers according to this invention is to be seen in formula (I) representing a vinyl or an allyl group containing polyether.

As already discussed an additional preferred alternative of this invention comprises copolymers that are based on co-monomers with mixed side chains. Each of the components a₁) and a₂) independently can show side chains with a length of 1 to 350 units, preferably between 5 to 150 , more preferably between 10 to 75. Such mixtures comprise in detail co-monomers with a preferred side chain length of 10, 15, 25, 30, 40, 50, 70, 90, 100, 120, 140, 150, 175, 200, 225, 250, 275, 300, 325, or 350 units, whereby each of these side chains as repeating units or mixtures thereof can be independently represented in one of the copolymers a₁) and a₂). The mentioned side chains preferably are represented by ethylene oxide/propylene oxide (EO/PO) repeating units.

Copolymers having a mixture of long and short side chains are particularly preferred in embodiments utilizing gypsum because of their greater efficacy in improving flow.

As already mentioned, the copolymers of this invention can be produced by relatively simple methods and especially when the polymerisation is carried out in an oxygen-depleted or oxygen-free atmosphere. There also may be added some amounts of solvents to make the ether component soluble. In the case that co-monomer a₂) is a poly-alcoholic group or an alkylen oxide derivatived poly-alcohol group, and R₂ of the ether component is hydrogen, respectively, water is the solvent to be preferred. Alternatively, a mixture of water and alcohol, such as isopropanol, may be added. In the case that R₂ is other than hydrogen, then organic solvents and especially toluene is to be seen as preferred.

For starting the polymerisation reaction, the basic mixture is heated to ambient temperature or smoothly cooled down. Another suitable alternative may be the addition of a redox system as initiator component. This redox system may comprise reducing and oxidizing agents and preferably Rongalite® or Bruggolite® and additionally a peroxide or a persulfate like H₂O₂ or ammonia persulfate. These reagents may be preferably used in systems with water as solvent. Rongalite®, also called Rongalit® (registered trademark of BASF) is sodium hydroxymethylsulfinate. The salt is water-soluble and generally sold as the dihydrate. This salt is prepared from sodium dithionite, it is used both as a reducing agent and as a reagent to introduce SO₂ groups into organic molecules. Bruggolite® (Brüggolit®) of Brüggemann Chemicals is a sodium formaldehyde sulfoxylate (SFS) based reducing agent for the textile, pharmaceutical and bleaching industry.

In principal, two alternatives may be selected to produce the copolymers according to this invention:

### Alternative A:

The co-monomer mixture and the reducing agent containing mixture are to be added to the ether containing mixture stepwise or simultaneously; the temperatures range from 0 to 50°C.

### Alternative B:

The mixture containing the oxidizing agent is to be added stepwise to the complete monomer mixture.

Then the reaction mixture is usually stirred until all the peroxide has reacted. In the case that organic solvents are to be used, these will be distilled. The reaction product will then be cooled down and the copolymer is to be neutralized by using a base (such as alkaline or alkaline earth metals, amines or alkanol amines). The addition of an aqueous solution comprising sodium or calcium hydroxide is a preferred alternative.

This disclosed process represents an example for producing the copolymer according to this invention.

Finally, this invention covers a preferred alternative with the copolymers in powdery form. The powder is to be achieved by a final drying step and more preferably, by spray drying.

In contrast to the state of the art this method produces beneficial powdery copolymers to be added to hydraulic and calcium sulfate containing mixtures in any selected dilution.

Besides the copolymeric dispersing component a) the aqueous composition according to the claimed liquid admixture additionally comprises an antifoaming agent as component b).

Preferably said antifoaming agent is triiso-butylphosphate.

The invention additionally comprises an admixture wherein said antifoaming agent comprises a mixtures of a tri-alkylphosphate and a polyoxypropylene copolymer.

Preferably surfactant component c) comprises an alcohol having a polyalkylene group consisting of a carbon chain length of 2 to 20 carbon atoms, with a specific carbon chain length of C₃-C₁₂.

In addition to the admixture per se the invention also relates to the admixture prepared by the process of forming an aqueous composition of containing components a), b) and c), by combining the dispersing component a) with the surfactant component c) as a stabilizing agent in water and adding the antifoaming agent b) to the aqueous solution consisting of the stabilized combination of components a) and c).

According to a second alternative components a), b) and c) are formed into an aqueous composition, by combining the antifoaming agent b) with the surfactant component c) as a stabilizing agent in water and adding the dispersant component a) to the aqueous solution consisting of combination of components b) and c). Alternatively, the aqueous solution of the combination of components b) and c) can be added to the dispersant component a). The invention generally relates to any sequence of combining the main components a), b) and c) under suitable reaction parameters such as temperature and pressure. Preferred are temperatures between 15 and 60 °C and more preferred are ambient temperatures and ambient pressure.

Thus, the liquid admixture composition of the invention is a stable liquid system being mainly a dispersion with a mixture of suspension systems and/or emulsion systems. The final system of the admixture depends from the chemical nature of components a), b) and c) and their amounts in the aqueous composition. Independent from the final systems or the comprised sub-systems the liquid admixture relates to the aqueous composition in a stable form. It is an important aspect of the given invention that the liquid admixture represents a stabilized solution with hydrophobic properties that shows its advantages in a calcium sulfate component containing system.

In addition to the admixture per se this invention also relates to a hydraulic binder containing composition that additionally to a calcium sulfate compound as the hydraulic component comprises a copolymer containing aqueous composition.

The invention also relates to a method of use of the claimed admixture as dispersing agent (superplasticizer) for a non-hardened (wet) a calcium sulfate binder containing composition. In this connection the copolymer is preferably used in amounts from 0.01 to 10.0 % by weight und more preferably in amounts from 0.05 to 5.0 % by weight, each amount relating to the weight of the binder component.

Surprisingly, homogenous dispersing agent containing admixtures with a high storage stability can be achieved by the addition of surfactants such as Lutensol®TO6 or a styrene/maleic acid copolymer. Such admixtures of the invention containing an aqueous composition of a dispersant, a defoamer and a surfactant show an improved stability over time, distinct dispersing properties in a binder and preferably calcium sulfate containing compositions and a low air entrainment during preparation. The admixtures of the invention comprise PCE as disclosed in US 20060281886 with acrylic acid and an alkoxylated vinylether as monomers, a water insoluble defoamer and an emulsifying surfactant. The preparation of such admixtures of the invention can vary: The defoamer and the surfactant can subsequently added to the aqueous dispersant solution or, alternatively, a mixture containing the defoamer and the surfactant can be dispersed into an aqueous PCE solution. In calcium sulfate containing binder systems such as anhydrite based grouts the admixtures of the invention cause a significant reduction in air entrainment and also a considerable improvement in flow compared to PCE containing formulations without a defoamer component.

The admixture composition of the invention and especially its application as dispersing agent in a calcium sulfate compound containing composition represents a clear improvement of the state of the art because the admixture with its contained aqueous composition induces a uniform plasticizing effect over time and an improvement of the physical properties due to reduction of both water and air content in the wet construction chemicals gypsum mass. Furthermore, the claimed admixture shows an improved storage stability and homogeneity. Additionally, the pumpability and workability of the wet hydraulic binder containing composition is significantly improved.

The following examples underline the advantages of the claimed admixture, its contained aqueous composition, the comprised components and its use.

### Examples

### 1. Admixture Preparation:

### Example 1.1

To a 1 liter four necked glass flask with a temperature controller, a reflux condenser and two dropping funnels 490.0 g water, 350.0 g (0.06 mol) polyethylene glycol-5800-monovinylether and 10.0 g NaOH (20 %) were added. An mixture comprising 26.0 g (0.36 mol) of acrylic acid in 40.0 g water was produced separately and then was added to the polyethylene glycol-monovinylether-solution; the pH decreased to 5.3. Then 40.0 mg iron(II)sulfate-heptahydrate ("green vitriol") and 4.0 g Rongalite® and 1.5 g mercaptoethanol was added. After a short period of stirring 3.6 g 50 % hydrogen peroxide was added. The temperature increased from 20 to 29°C. Then the solution was stirred for 10 minutes at ambient temperature and was subsequently neutralized with 37.0 g of a 20 % sodium hydroxide solution. The copolymeric dispersant was a light yellow colored, clear and aqueous polymer solution with a solid concentration of 40 % by weight. To the copolymeric dispersant the antifoaming agent and the surfactant were added: This emulsion was made by adding consecutively the antifoaming agent and the surfactant to the stirred solution (500 rpm) of the copolymeric dispersant at ambient temperature (25 °C). The amounts of the materials shown in Table 1 are in percent by weight of the solution.

### Example 1.2

To the flask according to Example 1 490 g water, 350.0 g (0.06 mol) polyethylene glycol-5800-monovinylether, 35.0 g (0.006 mol) of a mixed ethylenepropylene polyalkylene glycol-6000-monovinylether, having a 10 % propylene content, and 10.0 g NaOH (20 %) were added. A mixture comprising 26.0 g (0.36 mol) of acrylic acid in 40.0 g water was produced separately and then been added to the polyethylene glycol-monovinylether-solution; the pH decreased to 5.3. Then 40.0 mg iron(II)sulfate-heptahydrate ("green vitriol") and 4.0 g Rongalite® and 1.5 g mercaptoethanol were added. After a short period of stirring 3.6 g 50 % hydrogen peroxide were added. The temperature increased from 20 to 29°C. The solution was than stirred for 10 minutes at ambient temperature and was subsequently neutralized with 37.0 g of a 20 % sodium hydroxide solution. The copolymeric dispersant was a light yellow colored, clear and aqueous polymer solution with a solid concentration of 40 % by weight. To the copolymeric dispersant a mixture of the antifoaming agent and the surfactant has been added: This emulsion was formed by adding the antifoaming agent to the surfactant under stirring at 500 rpm and subsequently mixing this blend to the copolymeric dispersant at ambient temperature (25 °C). The amounts of the materials shown in Table 1 are in percent by weight of the solution.

### Example 1.3

To a 1 liter four necked glass flask with a temperature controller, a reflux condenser and two dropping funnels 335.0 g water, 210.0 g (0.07 mol) polyethylene glycol-3000-monovinylether and 23.3 g (0.047 mol) polyethylene glycol-500-monovinylether were added. Then 10.0 mg iron(II)sulfate-heptahydrate ("green vitriol") and 5.0 g Bruggolite FF6® and 1.9 g 3-mercaptopropionic acid have been added. Afterwards 25.4 g (0.35 mol) of acrylic acid were added to the polyethylene glycol-mono-vinylether-solution; the pH decreased to 4.4. After a short period of stirring 2.5 g 50 % hydrogen peroxide were added. The temperature increased from 20 to 35°C. Then the solution was stirred for 10 minutes at ambient temperature and was subsequently neutralized with 65.0 g of a 20 % sodium hydroxide solution. The co-polymeric dispersant was a light yellow colored, clear and aqueous polymer solution with a solid concentration of 40 % by weight. To the co-polymeric dispersant a mixture of the antifoaming agent and the surfactant has been added: This emulsion was formed by adding the antifoaming agent to the surfactant under stirring at 500 rpm and subsequently mixing this blend to the co-polymeric dispersant at ambient temperature (25 °C). The amounts of the materials shown in Table 1 are in percent by weight of the solution.

### 2. Application Test in a Gypsum System:

In the following admixtures (Test Solution) antifoaming agent A1 has been a polypropyleneglycol commercially available as Pluriol® P2000 and, antifoaming agent A2 an alkoxylated alcohol commercially available as Degressal® SD23 and antifoaming agent A3 a carboxylic ester commercially available as Degressal® SD30 all from BASF SE (Ludwigshafen, Germany). Surfactant S1 was a isotridecanolethoxylate commercially available as Lutensol® TO6 from BASF SE (Ludwigshafen, Germany). Surfactant S2 is a styrene/maleic acid copolymer which was synthesized according to EP 0306449 A2.

**Table1 (all Examples are comparative Examples)**

| Solution | Dispersant according to example | Antifoaming agent (wt.-%) | | | Surfactant (wt.-%) | | Stability over 3 months at 25°C |
|---|---|---|---|---|---|---|---|
| | | A1 | A2 | A3 | S1 | S2 | |
| E1 | 1.1 | 0.6 | | | 0,4 | | + |
| E2 | 1.1 | 0.4 | | | 0,6 | | + |
| E3 | 1.1 | | 0.6 | | 0.4 | | + |
| E4 | 1.1 | | 0.4 | | 0.6 | | + |
| E5 | 1.1 | 0.4 | | | | 0.6 | + |
| E6 | 1.1 | | 0.4 | | | 0.6 | + |
| E7 | 1.2 | 0.4 | | | 0.6 | | + |
| E8 | 1.2 | 0.4 | | | | 0.6 | + |
| E9 | 1.2 | | 0.4 | | | 0.8 | + |
| E10 | 1.2 | | 0.4 | | | 0.6 | + |
| E11 | 1.1 | | | 0.4 | | 0.6 | + |
| E12 | 1.3 | | | 0.4 | | 0.6 | + |
| C1 | 1.1 | 0.4 | | | | | -)* |
| C2 | 1.2 | 0.4 | | | | | -)* |
| C3 | 1.1 | | | | | | n.a. |

| | | | | | | | |
|---|---|---|---|---|---|---|---|
| )* phase separation within two days | | | | | | | |

**Guide recipe:**

| | |
|---|---|
| FGD anhydrite (flue gas gypsum) | 350 g |
| Sand (0 - 2 mm) | 536.3 g |
| Quartz filler 1600 | 100 g |
| CEM I 42.5 R | 10.5 g |
| Potassium sulfate | 2.5 g |
| Tylose MH 2000 | 0.3 g |
| Water | 200 g |
| Admixture (Superplasticizer) | 0.02 %-bwg (=by weight of gypsum) |

### Mixing Procedure and Measurement:

The mixing procedure and the measurements were done in accordance with the European Standard EN 196-1 and DIN 18555-2.

**Table 2 (all Examples are comparative Examples)**

| Admixture | Flow (cm) | | | | | Air content (%) |
|---|---|---|---|---|---|---|
| | 0 | 15 | 30 | 45 | 60 min | |
| E2 | 21.9 | 21.7 | 21.7 | 21.3 | 21.1 | 1.5 |
| E6 | 22.4 | 22.3 | 22.1 | 22.0 | 22.0 | 1.5 |
| E8 | 21.7 | 21.6 | 20.7 | 20.6 | 20.4 | 1.4 |
| C3 | 20.3 | 20.5 | 20.3 | 20.0 | 20.0 | 6.0 |

As illustrated in Table 2, the admixtures according to the invention show defoaming properties. The air contents were found to be significantly lower than in the comparison example C3.

### 3. Application Test in a Gypsum System:

**Guide recipe**

| | |
|---|---|
| Stucco | 400 g |
| Water | 260 g (Water to stucco ratio = 0.65) |

### Mixing Procedure and Measurement:

The required amount of liquid admixture is weighted into the mixing cup and water was added until the total amount of water is 260g. The stucco together with the accelerator is sifted into water within 15 sec and afterwards mixed with a Hobart® mixer for 15 sec at high speed (285 rpm). After 60 sec the flow value was measured with a cylinder (height: 10 cm, diameter: 5 cm). The set time was determined by means of the so-called knife cut test.

(All Examples are comparative Examples)

| Admixture | dosage [wt.-%] | Accelerator)* (g) | Flow [cm] | Set time (min:s) |
|---|---|---|---|---|
| E11 | 0.059 | 0.300 | 20.8 | 2:10 |
| E12 | 0.046 | 0.400 | 20.2 | 2:10 |

| | | | | |
|---|---|---|---|---|
| )* finely ground calcium sulfate dihydrate | | | | |

## Claims

1. A liquid admixture composition for a calcium sulfate based binder system containing an aqueous composition comprising
a) a copolymeric dispersing component, having a₁) a carbon-containing backbone to which are attached groups that function as calcium-sulfate compound-anchoring members by forming ionic bonds with calcium ions of the calcium sulfate compound, and a₂) oxyalkylene groups,
b) an antifoaming agent component, comprising tri-alkylphosphate
c) an surfactant component, selected from the group consisting of a styrene/maleic acid copolymer, or an alcohol ethoxylate R₁₀-(EO)-H wherein R₁₀ is an aliphatic hydrocarbon group having from 1 to 25 carbon atoms,
and
d) water.

2. The admixture according to claim 1 wherein the calcium sulfate compound is selected from the group consisting of calcium sulfate in its anhydrous and hydrate forms, such as gypsum, anhydrite, calcium sulfate dihydrate, calcium sulfate hemi-hydrate.

3. The admixture according to claim 1 wherein the amount of the component a) is 10.0 to 60.0 % by weight, the amount of the antifoaming agent b) is 0.01 to 10.0 % by weight, the amount of the surfactant component c) is 0.01 to 10.0 % by weight, and the rest is water, whereby any of the given amounts are based on the total aqueous composition.

4. The admixture according to claim 3 wherein the amount of the component a) is 20.0 to 50.0 % by weight, the amount of the antifoaming agent b) is 0.01 to 5.0 % by weight, the amount of the surfactant component c) is 0.01 to 5.0 % by weight, and the rest is water, whereby any of the given amounts are based on the total weight of the aqueous composition.

5. The admixture according to claim 1 wherein the antifoaming agent b) and the surfactant component c) are independently present in an amount of from 0.05 to 10.0 % by weight related to the dispersing component a).

6. The admixture according to claim 1 wherein the copolymer of component a) consists of two monomer components wherein component a₁) is at least one of an olefinic unsaturated mono-carboxylic acid co-monomer, an ester thereof or a salt thereof, or an olefinic unsaturated sulfonic acid compound, or a salt thereof, and component a₂) is a co-monomer of the formula (I) 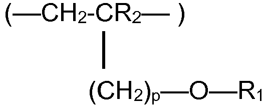 wherein R1 is 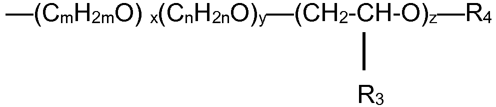 and whereby in R₂ is H or an aliphatic hydrocarbon group having from 1 to 5 carbon atoms, R₃ is a non-substituted or substituted aryl group , and
R₄ is H or an aliphatic hydrocarbon group having from 1 to 20 carbon atoms, a cycloaliphatic hydrocarbon group having from 5 to 8 carbon atoms, a substituted aryl group having from 6 to 14 carbon atoms or a compound selected from the group 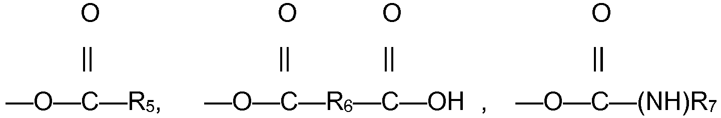 wherein R₅ and R₇ are independently an alkyl, aryl, aralkyl or alkaryl group and R₆ is an alkyliden, aryliden, aralkyliden or alkaryliden group and p is 0, 1, 2 or 3, m and n are independently 2, 3, 4 or 5, x and y are independently an integer from 1 to 350, and z is 0 to 200, with I) the copolymer being a polymer with the co-monomer units representing the components a₁) and a₂) each showing no intra-molecular differences, or/and II) with the copolymer being a polymeric mixture of the components a₁) and a₂) with the co-monomers representing the components a₁) or/and a₂) showing intra-molecular differences regarding R₁ or/and R₂ or/and R₃ or/and R₄ or/and R₅ or/and R₆ or/and R₇ or/and m or/and n or/and x or/and y or/and z.

7. The admixture according to claim 6 wherein R₃ is phenyl.

8. The admixture according to claim 1 wherein comonomer a₁) is acrylic acid, methacrylic acid, crotonic acid, isocrotonic acid, maleic acid, fumaric acid, citraconic acid, itaconic acid, (meth)allylsulfonic acid, vinylsulfonic acid, a salt thereof, alkyl or hydroxyalkyl esters thereof, or a mixture thereof.

9. The admixture according to claim 1 wherein component a) comprises from 30 to 99 mol % of the comonomer component a₁) and from 70 to 1 mol % of the ether component a₂).

10. The admixture according to claim 1 wherein the amount of the comonomer component a₁) is from 40 to 95 mol % and the amount of the comonomer component a₂) is from 60 to 5 mol %.

11. The admixture according to claim 1 wherein the comonomer component a₁) is an acrylic acid or a salt thereof and the ether component a₂) with p is 0 or 1 represents a vinyl or allyl group and additionally contains a polyether.

12. The admixture according to claim 6 wherein the dispersing component a) comprises additional structural groups in copolymerized form.

13. The admixture according to claim 12 wherein the additional structural group is at least one of a styrene, acrylamid, or a hydrophobic compound.

14. The admixture according to claim 13 wherein the additional structural group is at least one of an ester structural unit, polypropylene oxide and polypropylene oxide/polyethylene oxide (PO/PE), polybuthylene oxide-polyoxyethylene (PB/PE)-, polystyrene oxide-polyethylene oxide (PS/PE)-unit.

15. The admixture according to claim 12 wherein the additional structural group is contained in amounts up to 5 mol %.

16. The admixture according to claim 15 wherein the additional structural group is contained in amounts from 0.05 to 3.0 mol %.

17. The admixture according to claim 15 wherein the additional structural group is contained in amounts from 0.1 to 1.0 mol %.

18. The admixture according to claim 6 wherein formula (I) represents a vinyl or allyl group containing polyether.

19. The admixture according to claim 1 wherein the dispersing component a) is provided as a powder.

20. The admixture according to claim 19 wherein the powder has been produced by spray drying.

21. The admixture according to claim 1 wherein the antifoaming agent b) is triiso-butyl phosphate.

22. The admixture according to claim 1 wherein said antifoaming agent comprises a mixture of a tri-alkylphosphate and a polyoxypropylene copolymer.

23. The admixture according to claim 1 wherein the components a), b) and c) are formed into an aqueous composition by combining the dispersing component a) with the surfactant component c) as stabilizing agent in dilution water and adding the antifoaming agent b) to the aqueous solution containing of the stabilized combination of the components a) and c).

24. The admixture according claim 1 wherein the components a), b) and c) are formed into an aqueous composition by combining the antifoaming agent b) with the surfactant component c) as stabilizing agent in dilution water and adding the dispersing component a) to the aqueous solution containing of the combination of the components b) and c) or alternatively, adding the aqueous solution containing of the combination of the components b) and c) to the dispersing component a).

25. The admixture according to claim 1 wherein the components a), b) and c) are formed into an aqueous composition by adding the surfactant component c) to an aqueous solution containing the dispersing component a) and the antifoaming agent b).

26. The admixture according to one of the claims 23 to 25 wherein the formed aqueous solution is a physical blend.

27. A method comprising providing the admixture of claim 1 as dispersing agent for a non-hardened (wet) composition containing a calcium sulfate component as hydraulic binder by mixing the admixture with a wet and not-hardened composition, which contains a calcium sulfate component.

28. The method of claim 27 wherein the admixture is mixed with a wet and not-hardened and a calcium sulfate component containing composition wherein the calcium sulfate component is selected from the group consisting of calcium sulfate in its anhydrous and hydrate forms, such as gypsum, anhydrite, calcium sulfate dihydrate and calcium sulfate hemi-hydrate.

29. The method according to claim 28 wherein the admixture is mixed with a wet and not-hardened composition, which contains a calcium sulfate component, wherein the admixture is added as superplastiziser in amounts from 0.01 to 10.0 % by weight.

30. The method according to claim 29 wherein the admixture is added in an amount of from 0.05 to 5.0 % by weight wherein the amount is based on the weight of the calcium sulfate component as hydraulic binder.

31. The method according to one of the claims 27 to 30 wherein the calcium sulfate compound containing composition is an anhydrite based grout.

## Patentansprüche

1. Flüssige Gemischzusammensetzung für ein Bindemittelsystem auf Calciumsulfatbasis, die eine wässrige Zusammensetzung enthält, umfassend
a) eine copolymere Dispergierkomponente, die a₁) ein kohlenstoffhaltiges Gerüst, an das Gruppen gebunden sind, die als Calciumsulfatverbindung-verankernde Elemente wirken, indem sie ionische Bindungen mit Calciumionen der Calciumsulfatverbindung bilden, und a₂) Oxyalkylengruppen aufweisen,
b) eine Antischaummittelkomponente, die Trialkylphosphat umfasst,
c) eine Tensidkomponente ausgewählt aus der Gruppe bestehend aus einem Styrol/Maleinsäure-Copolymer, oder ein Alkoholethoxylat R₁₀-(EO)-H, wobei R₁₀ eine aliphatische Kohlenwasserstoffgruppe mit von 1 bis 25 Kohlenstoffatomen ist, und
d) Wasser.

2. Gemisch gemäß Anspruch 1, wobei die Calciumsulfatverbindung ausgewählt ist aus der Gruppe bestehend aus Calciumsulfat in seinen wasserfreien und Hydratformen, wie z. B. Gips, Anhydrit, Calciumsulfatdihydrat, Calciumsulfathemihydrat.

3. Gemisch gemäß Anspruch 1, wobei die Menge der Komponente a) 10,0 bis 60,0 Gew.-% beträgt, die Menge des Antischaummittels b) 0,01 bis 10,0 Gew.-% beträgt, die Menge der Tensidkomponente c) 0,01 bis 10,0 Gew.-% beträgt und der Rest Wasser ist, wobei die gegebenen Mengen auf die gesamte wässrige Zusammensetzung bezogen sind.

4. Gemisch gemäß Anspruch 3, wobei die Menge der Komponente a) 20,0 bis 50,0 Gew.-% beträgt, die Menge des Antischaummittels b) 0,01 bis 5,0 Gew.-% beträgt, die Menge der Tensidkomponente c) 0,01 bis 5,0 Gew.-% beträgt und der Rest Wasser ist, wobei die gegebenen Mengen auf das Gesamtgewicht der wässrigen Zusammensetzung bezogen sind.

5. Gemisch gemäß Anspruch 1, wobei das Antischaummittel b) und die Tensidkomponente c) unabhängig in einer Menge von 0,05 bis 10 Gew.-%, bezogen auf die Dispergierkomponente a), vorhanden sind.

6. Gemisch gemäß Anspruch 1, wobei das Copolymer der Komponente a) aus zwei Monomerkomponenten besteht, wobei die Komponente a₁) wenigstens eines von einem olefinisch ungesättigten Monocarbonsäure-Comonomer, einem Ester davon oder einem Salz davon oder einer olefinisch ungesättigten Sulfonsäureverbindung oder einem Salz davon ist und die Komponente a₂) ein Comonomer der Formel (I) ist, 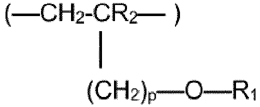 wobei R1 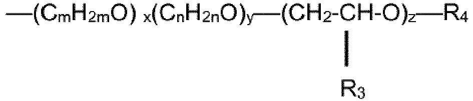 ist,
und wobei R₂ H oder eine aliphatische Kohlenwasserstoffgruppe mit von 1 bis 5 Kohlenstoffatomen ist, R₃ eine nichtsubstituierte oder substituierte Arylgruppe ist und R₄ H oder eine aliphatische Kohlenwasserstoffgruppe mit von 1 bis 20 Kohlenstoffatomen, eine cycloaliphatische Kohlenwasserstoffgruppe mit von 5 bis 8 Kohlenstoffatomen, eine substituierte Arylgruppe mit von 6 bis 14 Kohlenstoffatomen oder eine Verbindung ausgewählt aus der Gruppe 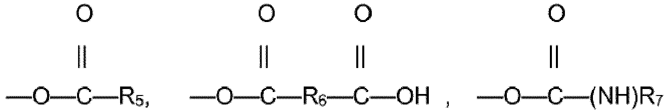 ist, wobei R₅ und R₇ unabhängig eine Alkyl-, Aryl-, Aralkyl- oder Alkarylgruppe sind und R₆ eine Alkyliden-, Aryliden-, Aralkyliden- oder Alkarylidengruppe ist und p 0, 1, 2 oder 3 ist, m und n unabhängig 2, 3, 4 oder 5 sind, x und y unabhängig eine ganze Zahl von 1 bis 350 sind und z von 0 bis 200 beträgt, wobei I) das Copolymer ein Polymer mit den Comonomereinheiten ist, die die Komponenten a₁) und a₂) darstellen, die jeweils keine intramolekularen Unterschiede aufweisen, oder/und II) wobei das Copolymer ein Polymergemisch der Komponenten a₁) und a₂) ist, wobei die Comonomere die Komponenten a₁) und/oder a₂) darstellen, die intramolekulare Unterschiede hinsichtlich R₁ oder/und R₂ oder/und R₃ oder/und R₄ oder/und R₅ oder/und R₆ oder/und R₇ oder/und m oder/und n oder/und x oder/und y oder/und z aufweisen.

7. Gemisch gemäß Anspruch 6, wobei R₃ Phenyl ist.

8. Gemisch gemäß Anspruch 1, wobei das Comonomer a₁) Acrylsäure, Methacrylsäure, Crotonsäure, Isocrotonsäure, Maleinsäure, Fumarsäure, Citraconsäure, Itaconsäure, (Meth)allylsulfonsäure, Vinylsulfonsäure, ein Salz davon, Alkyl- oder Hydroxyalkylester davon oder ein Gemisch davon ist.

9. Gemisch gemäß Anspruch 1, wobei die Komponente a) von 30 bis 99 mol-% an der Comonomerkomponente a₁) und von 70 bis 1 mol-% an der Etherkomponente a₂) umfasst.

10. Gemisch gemäß Anspruch 1, wobei die Menge der Comonomerkomponente a₁) von 40 bis 95 mol-% beträgt und die Menge der Comonomerkomponente a₂) von 60 bis 5 mol-% beträgt.

11. Gemisch gemäß Anspruch 1, wobei die Comonomerkomponente a₁) eine Acrylsäure oder ein Salz davon ist und die Etherkomponente a₂) mit p gleich 0 oder 1 eine Vinyl- oder Allylgruppe darstellt und zusätzlich einen Polyether enthält.

12. Gemisch gemäß Anspruch 6, wobei die Dispergierkomponente a) zusätzliche strukturelle Gruppen in copolymerisierter Form umfasst.

13. Gemisch gemäß Anspruch 12, wobei die zusätzliche strukturelle Gruppe wenigstens eines von einem Styrol, einem Acrylamid oder einer hydrophoben Verbindung ist.

14. Gemisch gemäß Anspruch 13, wobei die zusätzliche strukturelle Gruppe wenigstens eines von einer strukturellen Estereinheit, Polypropylenoxid und Polypropylenoxid/Polyethylenoxid (PO/PE), Polybutylenoxid/Polyoxyethylen(PB/PE)-, Polystyroloxid-Polyethylenoxid(PS/PE)-Einheit ist.

15. Gemisch gemäß Anspruch 12, wobei die zusätzliche strukturelle Gruppe in Mengen bis zu 5 mol-% enthalten ist.

16. Gemisch gemäß Anspruch 15, wobei die zusätzliche strukturelle Gruppe in Mengen von 0,05 bis 3,0 mol-% enthalten ist.

17. Gemisch gemäß Anspruch 15, wobei die zusätzliche strukturelle Gruppe in Mengen von 0,1 bis 1,0 mol-% enthalten ist.

18. Gemisch gemäß Anspruch 6, wobei die Formel (I) einen Vinyl- oder Allylgruppe-enthaltenden Polyether darstellt.

19. Gemisch gemäß Anspruch 1, wobei die Dispergierkomponente a) als Pulver bereitgestellt ist.

20. Gemisch gemäß Anspruch 19, wobei das Pulver durch Sprühtrocknen hergestellt worden ist.

21. Gemisch gemäß Anspruch 1, wobei das Antischaummittel b) Triisobutylphosphat ist.

22. Gemisch gemäß Anspruch 1, wobei das Antischaummittel ein Gemisch von einem Trialkylphosphat und einem Polyoxypropylen-Copolymer umfasst.

23. Gemisch gemäß Anspruch 1, wobei die Komponenten a), b) und c) in eine wässrige Zusammensetzung gebracht werden, indem die Dispergierkomponente a) mit der Tensidkomponente c) als Stabilisierungsmittel in Verdünnungswasser kombiniert wird und das Antischaummittel b) zu der wässrigen Lösung, die die stabilisierte Kombination der Komponenten a) und c) enthält, zugegeben wird.

24. Gemisch gemäß Anspruch 1, wobei die Komponenten a), b) und c) in eine wässrige Zusammensetzung gebracht werden, indem das Antischaummittel b) mit der Tensidkomponente c) als Stabilisierungsmittel in Verdünnungswasser kombiniert wird und die Dispergierkomponente a) zu der wässrigen Lösung, die die Kombination der Komponenten b) und c) enthält, zugegeben wird, oder alternativ dazu die wässrige Lösung, die die Kombination der Komponenten b) und c) enthält, zu der Dispergierkomponente a) zugegeben wird.

25. Gemisch gemäß Anspruch 1, wobei die Komponenten a), b) und c) in eine wässrige Zusammensetzung gebracht werden, indem die Tensidkomponente c) zu einer wässrigen Lösung, die die Dispergierkomponente a) und das Antischaummittel b) enthält, zugegeben wird.

26. Gemisch gemäß einem der Ansprüche 23 bis 25, wobei die gebildete wässrige Lösung ein physikalisches Gemisch ist.

27. Verfahren zum Bereitstellen des Gemischs gemäß Anspruch 1 als Dispergiermittel für eine nichtgehärtete (feuchte) Zusammensetzung, die eine Calciumsulfatkomponente als hydraulisches Bindemittel enthält, durch Mischen des Gemischs mit einer feuchten und nichtgehärteten Zusammensetzung, die eine Calciumsulfatkomponente enthält.

28. Verfahren gemäß Anspruch 27, wobei das Gemisch mit einer feuchten und nichtgehärteten und eine Calciumsulfatkomponente-enthaltenden Zusammensetzung gemischt wird, wobei die Calciumsulfatkomponente ausgewählt ist aus der Gruppe bestehend aus Calciumsulfat in seinen wasserfreien und Hydratformen, wie z. B. Gips, Anhydrit, Calciumsulfatdihydrat und Calciumsulfathemihydrat.

29. Verfahren gemäß Anspruch 28, wobei das Gemisch mit einer feuchten und nichtgehärteten Zusammensetzung gemischt wird, die eine Calciumsulfatkomponente enthält, wobei das Gemisch als Superweichmacher in Mengen von 0,01 bis 10,0 Gew.-% zugegeben wird.

30. Verfahren gemäß Anspruch 29, wobei das Gemisch in einer Menge von 0,05 bis 5,0 Gew.-% zugegeben wird, wobei die Menge auf das Gewicht der Calciumsulfatkomponente als hydraulisches Bindemittel bezogen ist.

31. Verfahren gemäß einem der Ansprüche 27 bis 30, wobei die Calciumsulfatverbindung-enthaltende Zusammensetzung ein Mörtel auf Anhydritbasis ist.

## Revendications

1. Composition de mélange liquide destinée à un système de liant à base de sulfate de calcium contenant une composition aqueuse, comprenant
a) un composant dispersant copolymère, ayant a₁) un squelette carboné auquel sont fixés des groupements qui ont une fonction d'éléments d'ancrage de composé de sulfate de calcium, par la formation de liaisons ioniques avec des ions calcium du composé de sulfate de calcium, et a₂) des groupements oxyalkylène,
b) un composant d'agent antimousse, comprenant un phosphate de trialkyle,
c) un composant d'agent tensioactif, choisi dans le groupe constitué par un copolymère de styrène/acide maléique, ou un éthoxylate d'alcool R₁₀-(OE)-H, où R₁₀ est un groupement hydrocarboné aliphatique ayant de 1 à 25 atomes de carbone, et
d) de l'eau.

2. Mélange selon la revendication 1, dans lequel le composé de sulfate de calcium est choisi dans le groupe constitué par le sulfate de calcium sous ses formes d'anhydre et d'hydrate, tel que le gypse, l'anhydrite, le sulfate de calcium dihydraté, l'hémihydrate de sulfate de calcium.

3. Mélange selon la revendication 1, dans lequel la quantité du composant a) va de 10,0 à 60,0% en poids, la quantité de l'agent antimousse b) va de 0,01 à 10,0% en poids, la quantité du composant d'agent tensioactif c) va de 0,01 à 10,0% en poids, et le reste est constitué d'eau, où l'une quelconque parmi les quantités données est basée sur la composition aqueuse totale.

4. Mélange selon la revendication 3, dans lequel la quantité du composant a) va de 20,0 à 50,0% en poids, la quantité de l'agent antimousse b) va de 0,01 à 5,0% en poids, la quantité du composant d'agent tensioactif c) va de 0,01 à 5,0% en poids, et le reste est constitué d'eau, où l'une quelconque parmi les quantités données est basée sur le poids total de la composition aqueuse.

5. Mélange selon la revendication 1, dans lequel l'agent antimousse b) et le composant d'agent tensioactif c) sont présents indépendamment selon une quantité allant de 0,05 à 10,0% en poids par rapport au composant dispersant a).

6. Mélange selon la revendication 1, dans lequel le copolymère du composant a) est constitué de deux composants monomères, où le composant a₁) est constitué d'au moins un parmi un co-monomère d'acide monocarboxylique insaturé oléfinique, un ester de celui-ci ou un sel de celui-ci, ou un composé d'acide sulfonique insaturé oléfinique, ou un sel de celui-ci, et le composant a₂) est constitué d'un co-monomère de formule (I) 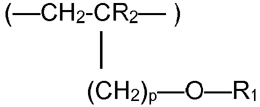 où R₁ est 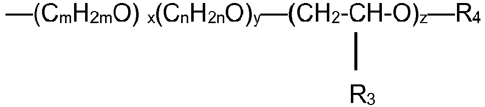 et où R₂ est H ou un groupement hydrocarboné aliphatique ayant de 1 à 5 atomes de carbone, R₃ est un groupement aryle non substitué ou substitué, et R₄ est H ou un groupement hydrocarboné aliphatique ayant de 1 à 20 atomes de carbone, un groupement hydrocarboné cyclo-aliphatique ayant de 5 à 8 atomes de carbone, un groupement aryle substitué ayant de 6 à 14 atomes de carbone, ou un composé choisi dans le groupe constitué par 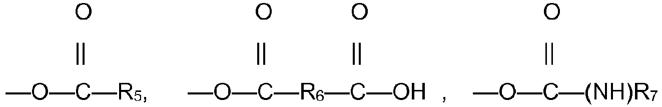 où R₅ et R₇ sont indépendamment un groupement alkyle, aryle, aralkyle ou alkaryle, et R₆ est un groupement alkylidène, arylidène, aralkylidène ou alkarylidène et p vaut 0, 1, 2 ou 3, m et n valent indépendamment 2, 3, 4 ou 5, x et y sont indépendamment un nombre entier allant de 1 à 350, et z va de 0 à 200, I) le copolymère étant un polymère avec les motifs de co-monomère représentant les composants a₁) et a₂) ne présentant chacun aucune différence intramoléculaire, et/ou II) le copolymère étant un mélange polymère des composants a₁) et a₂), les co-monomères représentant les composants a₁) et/ou a₂) présentant des différences intramoléculaires concernant R₁ et/ou R₂ et/ou R₃ et/ou R₄ et/ou R₅ et/ou R₆ et/ou R₇ et/ou m et/ou n et/ou x et/ou y et/ou z.

7. Mélange selon la revendication 6, dans lequel R₃ est phényle.

8. Mélange selon la revendication 1, dans lequel le co-monomère a₁) est l'acide acrylique, l'acide méthacrylique, l'acide crotonique, l'acide isocrotonique, l'acide maléique, l'acide fumarique, l'acide citraconique, l'acide itaconique, l'acide (méth)allylsulfonique, l'acide vinylsulfonique, un sel de ceux-ci, ou des hydroxyalkyl esters de ceux-ci, ou un mélange de ceux-ci.

9. Mélange selon la revendication 1, dans lequel le composant a) comprend de 30 à 99% molaire du composant de co-monomère a₁) et de 70 à 1% molaire du composant d'éther a₂).

10. Mélange selon la revendication 1, dans lequel la quantité du composant de co-monomère a₁) va de 40 à 95% molaire et la quantité du composant de co-monomère a₂) va de 60 à 5% molaire.

11. Mélange selon la revendication 1, dans lequel le composant de co-monomère a₁) est un acide acrylique ou un sel de celui-ci et le composant d'éther a₂), avec p valant 0 ou 1, représente un groupement vinyle ou allyle et contient de plus un polyéther.

12. Mélange selon la revendication 6, dans lequel le composant dispersant a) comprend des groupements structurels supplémentaires sous forme copolymérisée.

13. Mélange selon la revendication 12, dans lequel le groupement structurel supplémentaire est constitué d'au moins un parmi un styrène, un acrylamide ou un composé hydrophobe.

14. Mélange selon la revendication 13, dans lequel le groupement structurel supplémentaire est constitué d'au moins un parmi un motif structurel d'ester, un oxyde de polypropylène et un oxyde de polypropylène/oxyde de polyéthylène (PO/PE), un motif d'oxyde de polybutylène-polyoxyéthylène (PB/PE), d'oxyde de polystyrène-oxyde de polyéthylène (PS/PE).

15. Mélange selon la revendication 12, dans lequel le groupement structurel supplémentaire est contenu selon des quantités allant jusqu'à 5% molaire.

16. Mélange selon la revendication 15, dans lequel le groupement structurel supplémentaire est contenu selon des quantités allant de 0,05 à 3,0% molaire.

17. Mélange selon la revendication 15, dans lequel le groupement structurel supplémentaire est contenu selon des quantités allant de 0,1 à 1,0% molaire.

18. Mélange selon la revendication 6, dans lequel la formule (I) représente un polyéther contenant un groupement vinyle ou allyle.

19. Mélange selon la revendication 1, dans lequel le composant dispersant a) est fourni sous forme de poudre.

20. Mélange selon la revendication 19, dans lequel la poudre a été produite par séchage par pulvérisation.

21. Mélange selon la revendication 1, dans lequel l'agent antimousse b) est le phosphate de triisobutyle.

22. Mélange selon la revendication 1, dans lequel ledit agent antimousse comprend un mélange d'un phosphate de trialkyle et d'un copolymère de polyoxypropylène.

23. Mélange selon la revendication 1, dans lequel les composants a), b) et c) sont formés en une composition aqueuse en combinant le composant dispersant a) avec le composant d'agent tensioactif c) comme agent stabilisant dans de l'eau de dilution, et en ajoutant l'agent antimousse b) à la solution aqueuse contenant la combinaison stabilisée des composants a) et c).

24. Mélange selon la revendication 1, dans lequel les composants a), b) et c) sont formés en une composition aqueuse en combinant l'agent antimousse b) avec le composant d'agent tensioactif c) comme agent stabilisant dans de l'eau de dilution, et en ajoutant le composant dispersant a) à la solution aqueuse contenant la combinaison des composants b) et c) ou, de manière alternative, l'addition de la solution aqueuse contenant la combinaison des composants b) et c) au composant dispersant a).

25. Mélange selon la revendication 1, dans lequel les composants a), b) et c) sont formés en une composition aqueuse par l'addition du composant d'agent tensioactif c) à une solution aqueuse contenant le composant dispersant a) et l'agent antimousse b).

26. Mélange selon l'une des revendications 23 à 25, dans lequel la solution aqueuse formée est un mélange physique.

27. Méthode comprenant la mise à disposition du mélange selon la revendication 1 comme agent dispersant pour une composition non durcie (humide) contenant un composant de sulfate de calcium comme liant hydraulique, par le malaxage du mélange avec une composition humide et non durcie, qui contient un composant de sulfate de calcium.

28. Méthode selon la revendication 27, dans laquelle le mélange est malaxé avec une composition humide et non durcie, contenant un composant de sulfate de calcium, où le composant de sulfate de calcium est choisi dans le groupe constitué par le sulfate de calcium sous ses formes d'anhydre et d'hydrate, tel que le gypse, l'anhydrite, le sulfate de calcium dihydraté, et l'hémihydrate de sulfate de calcium.

29. Méthode selon la revendication 28, dans laquelle le mélange est malaxé avec une composition humide et non durcie, contenant un composant de sulfate de calcium, où le mélange est ajouté comme super plastifiant selon des quantités allant de 0,01 à 10,0% en poids.

30. Méthode selon la revendication 29, dans laquelle le mélange est ajouté selon une quantité allant de 0,05 à 5,0% en poids, où la quantité est basée sur le poids du composant de sulfate de calcium comme liant hydraulique.

31. Méthode selon l'une des revendications 27 à 30, dans laquelle la composition contenant le composé de sulfate de calcium est un coulis de ciment à base d'anhydrite.
